# EUROPÄISCHE PATENTSCHRIFT

(11) **EP 3 791 150 B1**
(45) Veröffentlichungstag und Bekanntmachung des Hinweises auf die Patenterteilung: **06.05.2026**
(21) Anmeldenummer: 19722041.1
(22) Anmeldetag: 29.04.2019
(51) Int. Cl.: G01N 1/22, G01N 1/08, G01N 1/10

(54) **VERFAHREN ZUR GESCHLOSSENEN MUSTERENTNAHME UND MUSTERENTNAHMEVORRICHTUNG**
METHOD FOR CLOSED SAMPLING, AND SAMPLING DEVICE
PROCÉDÉ DE PRÉLÈVEMENT D'ÉCHANTILLONS FERMÉ ET DISPOSITIF DE PRÉLÈVEMENT D'ÉCHANTILLONS

(30) Priorität: 07.05.2018 DE 102018207059
(43) Veröffentlichungstag der Anmeldung: 17.03.2021
(73) Patentinhaber: Boehringer Ingelheim International GmbH, 55216 Ingelheim am Rhein (DE)
(72) Erfinder: WIRTH, Thomas, 55216 Ingelheim am Rhein (DE); BAATZ, Tim, 55216 Ingelheim am Rhein (DE); DZIEWAS, Georg, 55216 Ingelheim am Rhein (DE)
(74) Vertreter: Höfer, Friederike
(86) Internationale Anmeldenummer: PCT/EP2019/060916
(87) Internationale Veröffentlichungsnummer: WO 2019/214981

(56) Entgegenhaltungen:
- WO-A1-96/29587
- DE-B3- 102006 062 982
- JP-A- 2005 016 961
- US-A1- 2017 307 447
- QCLABEQUIPEMENT.COM: "Probe for sampling from a bag", 9 March 2013 (2013-03-09), XP055604731, Retrieved from the Internet <URL:https://www.coffeelabequipment.com/SAMPLER_SACK.pdf> [retrieved on 20190711]

## Beschreibung

Die Erfindung betrifft ein Verfahren zur geschlossenen Musterentnahme sowie eine Musterentnahmevorrichtung.

Um in Produktionsbetrieben, insbesondere chemischen Produktionsbetrieben, hergestellte Stoffe, insbesondere Feststoffe, analytisch untersuchen zu können, werden regelmäßig Proben derartiger Feststoffe entnommen. Dies erfolgt durch Abfüllung der hergestellten Stoffe (Bulkware) in kleinere Gebinde. Aus Gründen des Produktschutzes und des Arbeitsschutzes erfolgt eine derartige Abfüllung in der Regel geschlossen. Dadurch wird sowohl das Eindringen von Fremdkörpern (z.B. Staub, Fasern) in das zu bemusternde Gebinde unterbunden (Produktschutz) als auch die Exposition der Mitarbeiter mit Produktstäuben verhindert (Arbeitsschutz).

Im Stand der Technik wird dies dadurch erreicht, dass sogenannte Endlos-Liner-Systeme eingesetzt werden. Um von diesen abgefüllten Gebinden der Bulkware Proben für analytische Zwecke entnehmen zu können, ist es - wie bereits bei der Abfüllung beschrieben - aus Produktschutz- und Arbeitsschutzgründen notwendig, die Beprobung geschlossen durchzuführen.

Um eine geschlossene Musterentnahme von Feststoffen aus Endlos-Liner-Abfüllanlagen unter Berücksichtigung der Anforderungen an Produkt- und Arbeitsschutz durchführen zu können, ist im Stand der Technik vorgesehen, manuelle oder automatische Probenentnahme mit Hilfe spezieller Musterentnahmekonstruktionen aus der Endlos-Liner-Anlage durchzuführen. Obwohl derartige Musterentnahmekonstruktionen mit integrierter Abluft-Entstaubung ein sehr hohes Maß an Schutz aufweisen, handelt es sich hierbei um keinen vollständig geschlossenen Vorgang. Beispielsweise können Musterflaschen an der Außenseite kontaminiert werden und müssen dann beispielsweise mit Lösungsmittel gereinigt werden. Darüber hinaus ist eine derartige Probenentnahme nicht für Produkte mit schlechten Fließeigenschaften geeignet.

Alternativ hierzu ist vorgesehen, eine Produkt-Kleinmenge von bspw. 200 g über das Endlos-Liner-Abfüllsystem zu entnehmen. Diese entnommene Kleinmenge kann dann in einer abgeschlossenen Umgebung, beispielsweise in einer Einweg-Glovebox aus Kunststofffolie, aufgeschnitten und mittels Plastiklöffel in Musterflaschen abgefüllt werden. Nachteilig hieran ist, dass es sich um einen zeitaufwendigen Prozess handelt, bei dem die Musterflaschen auch von außen kontaminiert werden können und partikuläre Verunreinigung der Mustermenge mit Resten der Kunststofffolie möglich ist. Die aus dem Bemusterungsprozess stammenden partikulären Verunreinigung können je nach vorgegebenem Testprozedere zu falsch-positiven analytischen Ergebnissen führen, die eine Freigabe und damit die Vermarktung der betroffenen Feststoff-Charge, z.B. aufgrund partikulärer Verunreinigungen, verhindern; betroffene Chargen müssen somit der Vernichtung zugeführt werden.

Eine dritte Möglichkeit ist eine offene Entnahme von Schüttgütern, beispielsweise mit Probensammlern. Nachteilig hieran ist aber, dass staubige Produkte nicht ohne Staubentwicklung bemustert werden können. Darüber hinaus wird durch die Bemusterung das Gewicht des Gebindes reduziert, was eine neue Wiegung und Etikettierung erfordert.

Aufgabe der Erfindung ist es somit, ein Verfahren und eine Vorrichtung insbesondere zur Durchführung des Verfahrens anzugeben, die die Nachteile des Standes der Technik vermeiden und insbesondere eine Abfüllung der Feststoffprodukte in kleine Mustergebinde zur nachfolgenden Analyse gewährleisten, die Staubexpositionen für die durchführenden Mitarbeiter vermeidet und das Produkt sowohl im Abfüllgebinde (Bulkware) als auch Mustergebinde vor externen und/oder partikulären Verunreinigungen schützt.

WO 96/29587 A1, DE 10 2006 062982 B3, US 2017/307447 A1 zeigen beispielhafte Entnahmenvorrichtungen.

Erfindungsgemäß wird diese Aufgabe durch ein Verfahren zur geschlossenen Musterentnahme aus einer Abfüllanlage gemäß Anspruch 1 und eine Musterentnahmevorrichtung aus Anspruch 4 gelöst.

Bei dem erfindungsgemäßen Verfahren wird zunächst eine Mustermenge in ein Behältnis mit einer Wand abgefüllt. Nach der Abfüllung wird auf das Behältnis mit der Wand ein Verstärkungselement (Lochverstärker) aufgebracht. Sodann wird eine Bruchstelle im Bereich des Verstärkungselementes in die Wand des Behältnisses eingebracht bspw. durch Ritzen und ein Musterentnahmeaufsatz mit einem Hohlrohr im Bereich der Bruchstelle in die Wand des Behältnisses eingeführt. Über das Hohlrohr, das in das Behältnis eingesetzt wurde, wird einmalig oder mehrfach ein mit dem Hohlrohr verbundener Musterbehälter befüllt. Nach Befüllen mit der zu untersuchenden Mustermenge wird der Musterbehälter vom Musterentnahmeaufsatz mit Hohlrohr entfernt und anschließend verschlossen. Nachdem die Abnahme der Proben abgeschlossen ist, wird der Aufsatz mit Hohlrohr von dem Behältnis mit der Wand entfernt und die Bruchstelle im Bereich des Verstärkungselementes verschlossen.

In einer besonders bevorzugten Ausführungsform der Erfindung ist vorgesehen, dass zum geschlossenen Befüllen der Musterbehälter mit dem Musterentnahmeaufsatz mit Hohlrohr über eine Schraubverbindung verbunden wird. Dies hat den Vorteil, dass der Musterbehälter sehr leicht an den Musterentnahmeaufsatz angeschlossen und von ihm wieder entfernt werden kann. Als Verstärkungselement wird bevorzugt ein Lochverstärker mit weitgehend kreisrunder Innenkontur verwandt, wobei der Lochverstärker, sowohl mit als auch ohne Dichtlippe ausgeführt sein kann. Durch den - in der Regel mit Hilfe eines flächigen Klebeverfahrens - aufgebrachten Lochverstärker wird sichergestellt, dass die Verletzung der Behältniswand nach Ritzen bzw. Einschneiden auf den Innenbereich des Lochverstärkers beschränkt bleibt, da durch die flächige Verklebung ein weiteres Einreißen der Behältniswand unterbunden wird. Mit dem Lochverstärker wird somit eine dichte Verbindung der Außenseite des Hohlrohrs des Musterentnahmeaufsatzes mit der Behältniswand ermöglicht. Lochverstärker mit einer Dichtlippe haben den Vorteil, dass durch die Elastizität der Dichtlippe eine formschlüssige Abdichtung des Hohlrohrs zum Behältnis mit der Wand erfolgt und Feststoffaustritt sicher verhindert wird.

Im Bereich des Verstärkungselementes wird die Bruchstelle in die Wand des Behältnisses, bevorzugt durch Ausschneiden, Einschneiden und/oder Anritzen, eingebracht.

Neben dem erfindungsgemäßen Verfahren zur Abnahme einer Mustermenge stellt die Erfindung auch eine Musterentnahmevorrichtung, bevorzugt zur Durchführung des Verfahrens, zur Verfügung. Die erfindungsgemäße Musterentnahmevorrichtung zeichnet sich dadurch aus, dass es ein Behältnis mit einer Wand aufweist, wobei das Behältnis mit der Wand ein Verstärkungselement umfasst.

Des Weiteren ist bei der Musterentnahmevorrichtung ein Musterentnahmeaufsatz, bevorzugt mit einem Gewinde vorgesehen, wobei der Musterentnahmeaufsatz sich dadurch auszeichnet, dass er ein Hohlrohr umfasst, das in das Behältnis mit der Wand im Bereich des Verstärkungselementes einbringbar ist.

In einer weitergebildeten Ausgestaltung der Erfindung ist vorgesehen, dass das Behältnis ein Beutel, insbesondere ein Kunststoffbeutel, bevorzugt ein Polyethylenbeutel ist. Polyethylenbeutel sind kostengünstig und haben den Vorteil, dass sie aus Polyethylengranulat hergestellt werden können, die einen niedrigen Weichmacheranteil aufweisen, und damit nur geringe Mengen an Weichmachern an das abgepackte Produkt abgeben. Im Besonderen kommen durchsichtige Polyethylenbeutel zum Einsatz, die die Musternahme erleichtern, da das Ende des eingeführten Hohlrohrs im Rahmen des beschriebenen Musternahmeprozesses gut zu erkennen ist.

Besonders bevorzugt ist es, wenn die Musterentnahmevorrichtung einen Musterbehälter umfasst, der an den Musterentnahmeaufsatz bevorzugt mittels eines Schraubgewindes anschließbar ist.

In einer besonders bevorzugten Ausführungsform ist vorgesehen, dass das Gewinde als ein Aufschraubgewinde am Hohlrohr ausgebildet ist. Der Musterbehälter selbst hat bevorzugt ein Außengewinde, das mit dem Aufschraubgewinde am Hohlrohr verbindbar ist. Der Musterbehälter ist so beschaffen, dass er ein Volumen von z.B. 10 g bis 2000 g, bevorzugt 100 g bis 400 g, besonders bevorzugt 200 g bis 300 g aufnehmen kann.

Die Erfindung soll nachfolgend, ohne Beschränkung hierauf anhand der Figuren beschrieben werden. Es zeigen:
Figur 1a-1f die verschiedenen Verfahrensschritte der Probenentnahme mit Hilfe des erfindungsgemäßen Verfahrens in einen Musterbehälter;
Figur 2a-2c unterschiedliche Ansichten eines Hohlrohrs mit Adapter zum Anschließen eines Musterbehälters;
Figur 3 Lochverstärker ohne Dichtlippe; und
Figur 4 Lochverstärker mit Dichtlippe.

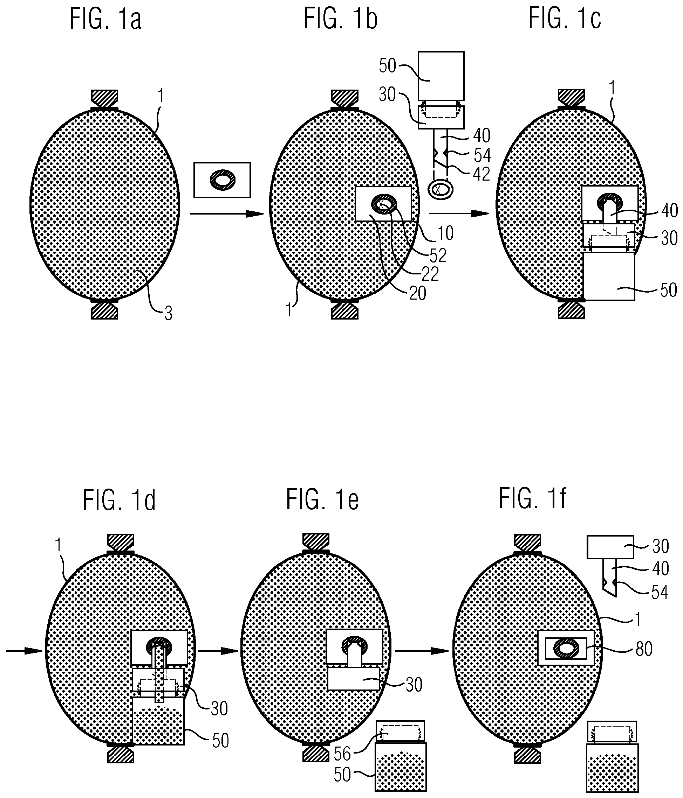

In den Figuren 1a - 1f sind die Verfahrensschritte des erfindungsgemäßen Verfahrens zur geschlossenen Musterentnahme dargestellt.

Figur 1a zeigt ein Behältnis 1 mit einer Wand, in dem der zu untersuchende Stoff 3 eingebracht ist. Bei dem Behältnis 1 handelt es sich um ein Behältnis mit einer Wandung, bevorzugt um eine Art Beutel, insbesondere einen Kunststoffbeutel, der bevorzugt aus Polyethylen gefertigt ist. An einem Punkt der Wandung des Behältnisses 1 der vorliegend mit 10 bezeichnet ist, wird ein Verstärkungselement 20 aufgebracht. Innerhalb des ausgesparten Bereichs des Verstärkungselements 20 wird eine Bruchstelle 22 in die Wand des Behältnisses 1 eingebracht (Figur 1b). Sodann wird in die Bruchstelle im Bereich des Verstärkungselementes ein Musterentnahmeaufsatz 30 eingeführt. Der Musterentnahmeaufsatz 30 umfasst ein Hohlrohr 40 sowie einen am Musterentnahmeaufsatz angebrachten Musterbehälter 50. Das Hohlrohr 40 weist an seiner Vorderseite eine Schräge 42 auf, die dem Einstich dient und die Bruchstelle in der Wand des Behältnisses durchstößt. Den Einsatz des Musterentnahmeaufsatzes 30 mit dem Hohlrohr 40 in die Wand des Behältnisses zeigt Figur 1c.

Deutlich zu erkennen in Figur 1c ist die Verbindung zwischen Hohlrohr und dem Inneren des Behältnisses 1. Das Hohlrohr, wie in Figur 1b dargestellt, weist bevorzugt eine umlaufende Nut 54 auf, in die die Innenseite der Lochverstärker, bzw. wie im vorliegenden Fall die Dichtlippe 52 eines Lochverstärkers mit Dichtlippe eingreift und eine dichte Verbindung zwischen dem Hohlrohr und der Wand des Behältnisses und damit dem Inneren des Behältnisses zur Verfügung stellt. Wenn das Hohlrohr eine leitende Verbindung für den im Behältnis aufgenommenen Füllstoff darstellt, wird der Füllstoff aus dem Behältnis 1 in den an den Musterentnahmeaufsatz 30 angeschlossenen Musterbehälter 50, wie in Figur 1d dargestellt, abgefüllt. Der Musterbehälter 50 ist bevorzugt mit dem Musterentnahmeaufsatz 30 über ein Schraubgewinde verbunden. Nachdem der Musterbehälter 50 mit einer vorbestimmten Mustermenge an Füllstoff aus dem Behältnis 1 gefüllt ist, wird bei noch eingesetztem Musterentnahmeaufsatz 30, wie in Figur 1e dargestellt, der Musterbehälter 50 vom Musterentnahmeaufsatz 30 abgeschraubt und mit einem Deckel 56 verschlossen. Nachdem der Musterentnahmeaufsatz 30, wie in Figur 1f gezeigt, vom Behältnis entfernt wurde, wird das Behältnis 1 an der Stelle, an der der Musterentnahmeaufsatz 30 mit Hohlrohr 40 in die Öffnung des Behältnisses eingesetzt war, verschlossen. Das Verschließen der Öffnung ist mit 80 gekennzeichnet.

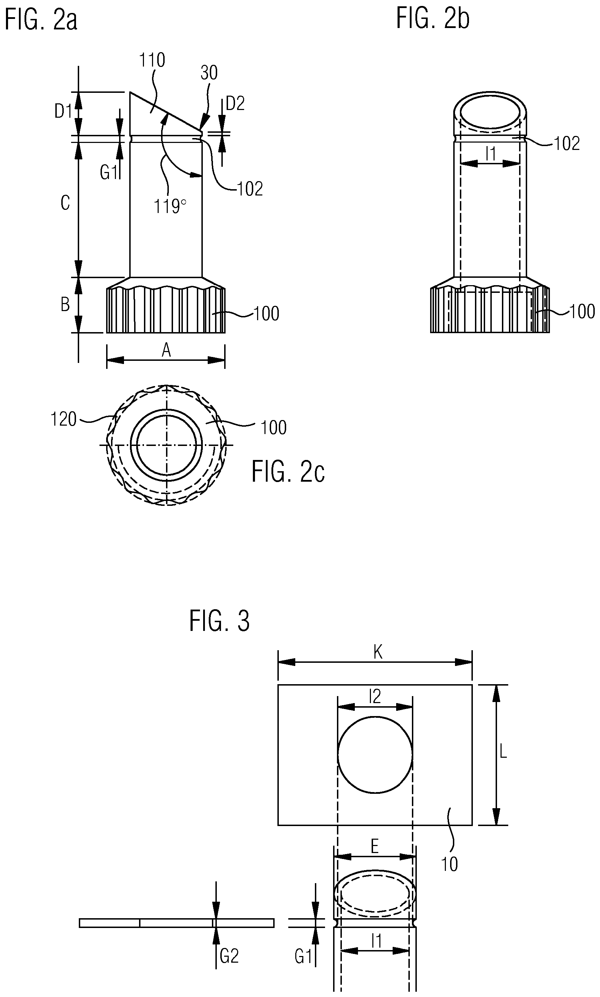

In Figur 2a-2c ist eine mögliche Ausgestaltung eines Musterentnahmeaufsatzes 30 gezeigt. Der Musterentnahmeaufsatz 30 umfasst ein Aufschraubgewinde 100 mit einer Riffelung. Das Aufschraubgewinde 100 kann verschieden ausgeführt sein. Die Funktion des Aufschraubgewindes ist der lückenlose und dichte Anschluss des Musterbehälters an den Musterentnahmeaufsatz 30. Anstelle der Schraubverbindung, wie dargestellt, sind auch andere Arten der Verbindung des Musterbehälters an den Musterentnahmeaufsatz 30 denkbar, beispielsweise ein lückenloser und dichter Anschluss mittels eines Einrastmechanismus. Der Musterentnahmeaufsatz 30 weist eine Nut 102 auf; sie kann die innere Kante der Öffnung des Lochverstärkers bzw. - im Falle eines Lochverstärkers mit Dichtlippe - die die Öffnung des Lochverstärkers umgebende Dichtlippe aufnehmen und die Verbindung von Musterentnahmeaufsatz und Behältnis dicht verschließen. Die Höhe des Hohlrohrs bis zur Nut ist mit Buchstabe C gekennzeichnet. Bevorzugt liegt die Höhe C im Bereich 0mm bis 100 mm, insbesondere im Bereich 25 mm bis 80 mm, ganz bevorzugt im Bereich 40 mm bis 70 mm. Bei Höhen C kleiner als 5 mm wird das Handling des Musterentnahmeaufsatzes schwierig, da die Nut zu nah am Schraubenaufsatz ist und eine Interaktion zwischen dem Behältnis und dem Musterentnahmeaufsatz vorliegt. Ist die Höhe C des Hohlrohrs größer als 100 mm, so ist das Handling ebenfalls schwierig, da ein langer Hebel vorliegt. Die Schräge 110 des Hohlrohrs des Musterentnahmeaufsatzes 30 ist durch das Verhältnis der Höhe D1 und der Höhe D2 gekennzeichnet. Das Höhenverhältnis von D1 zu D2 bestimmt zusammen mit dem Außendurchmesser des Hohlrohrs den Winkel der Schräge. Wird wie im vorliegenden Beispiel die Höhe D2 mit 1 mm gewählt und die Höhe D1 mit 22 mm, so ergibt sich in Abhängigkeit von Innendurchmesser und Wandstärke des Hohlrohrs (siehe unten) beispielsweise ein Winkel von 119°. Bevorzugt beträgt die Höhe D1 5 mm bis 50 mm, insbesondere 10 mm bis 40 mm, ganz bevorzugt 20 mm bis 30 mm. Ist die Höhe D1 größer als 50 mm, so ergibt sich der Nachteil, dass die Schräge 110 zu stark in das Behältnis eintaucht und den Fluss des Festkörpers, insbesondere des Pulvers, bei der Probenentnahme in den Musterbehälter behindert. Bei Höhen D1, die kleiner als 5 mm sind, liegt praktisch keine Schräge mehr vor, die aber benötigt wird, um die angeschnittene Folie zu durchstechen. In einem derartigen Fall handelt es sich um eine stumpfe Spitze. Die Höhe D2 liegt im Bereich 0,5 mm bis 10 mm, bevorzugt 1 mm bis 8 mm, insbesondere 2 mm bis 5 mm. Ist die Höhe D2 kleiner als 0,5 mm, so besteht die Gefahr, dass die Dichtlippe aus der Nut rutscht und der Musterentnahmeaufsatz nicht hält. Die sich aus den angegebenen Bereichen von D1 und D2 ergebenden Winkel liegen zwischen 95° und 150°, bevorzugt 100° bis 140°, insbesondere 110° bis 130°, ganz bevorzugt 115° bis 125°.

Die Wandstärke des hier dargestellten Rohrstückes des Hohlrohrs, das vorliegend als Stechheber eingesetzt wird, liegt im Bereich 1 mm bis 5 mm, bevorzugt 2 mm bis 4,5 mm, insbesondere 2,5 mm bis 3,5 mm. Bei einer Nuttiefe von mindestens 0,5 mm für ein Einrasten der Dichtlippe sind Wandstärken kleiner 1,5 mm nur schwer zu realisieren, da ansonsten das Rohr mechanisch an der Stelle der Nut zu stark geschwächt wird. Der Innendurchmesser I1 des Musterentnahmeaufsatzes beträgt zwischen 10 mm und 50 mm, bevorzugt 20 mm bis 40 mm, insbesondere 25 mm bis 35 mm. Der Innendurchmesser kann variieren als Funktion der Fließeigenschaften des zu entnehmenden Probematerials. Für schwer fließfähiges Mustermaterial sind Innendurchmesser größer 25 mm vorteilhaft, da nur dann eine Verstopfung des Musterentnahmeaufsatzes sicher vermieden werden kann. Die Breite G1 der Nut 102 beträgt 0 mm bis 6 mm, bevorzugt 1 mm bis 5 mm, insbesondere 2 mm bis 4 mm. Die Nutbreite wird so abgestimmt, dass sie das Einrasten der Dichtlippe sicherstellt.

In einer weiteren Ausführungsform weist das Hohlrohr des Musternahmeaufsatzes neben der oben genannten ersten Nut 102 eine zweite umlaufende Nut auf, die die innere Kante der Öffnung des Lochverstärkers bzw. - im Falle eines Lochverstärkers mit Dichtlippe - die die Öffnung des Lochverstärkers umgebende Dichtlippe aufnehmen und die Verbindung von Musterentnahmeaufsatz und Behältnis dicht verschließen kann. Die Breite der zweiten Nut korreliert mit der Breite G1 der ersten Nut 102: Sie beträgt 0 mm bis 6 mm, bevorzugt 1 mm bis 5 mm, insbesondere 2 mm bis 4 mm, und wird so abgestimmt, dass sie das Einrasten der Dichtlippe sicherstellt. Die Tiefe der zweiten Nut ist bevorzugt mindestens 0,5 mm. Die zweite Nut befindet sich am Hohlrohr zwischen dem Gewinde und der ersten Nut 102, bevorzugt näher an der ersten Nut als am Gewinde. Die Entfernung der zweiten Nut vom äußersten Ende der Eintauchspitze des Hohlrohrs, d.h. vom Ende der Höhe D1, ist bevorzugt nicht größer als 50 mm.

In dieser Ausführungsform kann im Rahmen des erfindungsgemäßen Verfahrens zur geschlossenen Musterentnahme die Innenseite der Lochverstärker bzw. die Dichtlippe 52 eines Lochverstärkers mit Dichtlippe in die erste oder in die zweite Nut eingreifen, so dass eine dichte Verbindung zwischen dem Hohlrohr und der Wand des Behältnisses und damit dem Inneren des Behältnisses zur Verfügung gestellt wird. Erfolgt das Eingreifen in die zweite Nut, übt die erste Nut 102 eine Sicherungsfunktion aus: Sollte der Lochverstärker bzw. die Dichtlippe in Richtung der Spitze des Hohlrohrs aus der zweiten Nut rutschen, ist ein Einrasten des Lochverstärkers bzw. der Dichtlippe in die erste Nut möglich, so dass eine unbeabsichtigte Trennung des Behältnisses vom Hohlrohr des Musternahmeaufsatzes verhindert werden kann.

In Figur 2b ist eine dreidimensionale Ansicht eines Musterentnahmeaufsatzes wie in Figur 2a gezeigt, aus dem insbesondere die Innendurchmesser I1 hervorgehen. Gleiche Bauteile sind mit den gleichen Bezugsziffern gekennzeichnet.

Die Figur 2c zeigt die Draufsicht auf ein Aufschraubgewinde mit Riffelung 120.

Figur 3 zeigt einen Lochverstärker 10 ohne eine Dichtlippe. Der Innendurchmesser I2 der Öffnung des Lochverstärkers richtet sich nach dem Außendurchmesser E der Eintauchspitze des Musterentnahmeaufsatzes. Bevorzugt beträgt die Differenz E-I2 zwischen 0 mm und 5 mm, insbesondere 1 mm bis 4 mm, ganz besonders bevorzugt 2 mm bis 3 mm. Bei einem Lochverstärker ohne Dichtlippe, wie in diesem Fall, bestimmt der Außendurchmesser E der Eintauchspitze in Relation zum Innendurchmesser I2 die Kraft, mit der der Lochverstärker über das Rohr vor dem Einrasten gezogen werden muss, und damit später die Dichtigkeit der Verbindung. Die Dicke des Lochverstärkers G2 liegt im Bereich 0,1 mm bis 2 mm, bevorzugt 0,2 mm bis 1,5 mm, insbesondere 0,3 mm bis 1 mm und korreliert mit der Nutbreite G1.

Während der dargestellte Lochverstärker eine rechteckige Form mit einer Länge L und einer Länge K aufweist, sind auch andere geometrische Formen möglich, z. B. runde Formen oder Polygone. Der Lochverstärker muss eine ausreichend große Fläche um die Öffnung herum aufweisen, damit die Haftung des geklebten Verstärkers auf dem Behältnis gewährleistet ist. Die Längendifferenzen L-I2 und K-I2 liegen im Bereich 10 mm bis 60 mm, bevorzugt 20 mm bis 50 mm, insbesondere 30 mm bis 40 mm.

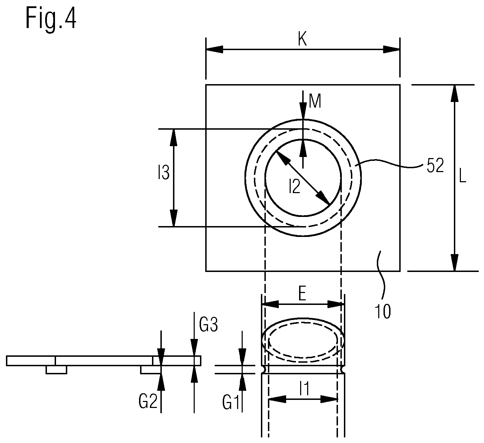

In Figur 4 wird eine alternative Ausgestaltung eines Lochverstärkers mit einer Dichtlippe gezeigt. Der Lochverstärker ist wieder mit der Bezugsziffer 10 gekennzeichnet. Der Innendurchmesser der Öffnung des Lochverstärkers wird mit der Bezugsziffer I3, der Innendurchmesser der Dichtlippe 52 wird mit I2 bezeichnet. Der Innendurchmesser der Dichtlippe richtet sich nach dem Außendurchmesser der Eintauchspitze des Musterentnahmeaufsatzes 30. Bevorzugt beträgt die Differenz E-I2 zwischen 0 mm und 5 mm, insbesondere 1 mm bis 4 mm, ganz besonders bevorzugt 2 mm bis 3 mm. Der Innendurchmesser I3 der Öffnung des Lochverstärkers richtet sich nach dem Innendurchmesser der Dichtlippe I2. Bevorzugt liegt die Differenz I3-I2 im Bereich von 0 mm bis 5 mm, insbesondere von 1 mm bis 4 mm, ganz bevorzugt von 2 mm bis 3 mm. Die Breite der Dichtlippe wird vorliegend mit M bezeichnet und liegt im Bereich 1 mm bis 10 mm, bevorzugt 2 mm bis 8 mm, insbesondere 4 mm bis 7 mm. Die Breite der Dichtlippe M ist so zu wählen, dass die Dichtlippe eine ausreichende Haftung zum Lochverstärker, auf den sie aufgeklebt wird, aufweist. Neben der gezeigten runden Außenkontur der Dichtlippe sind auch andere geometrische Konturen, wie runde Formen oder Polygone möglich. In einer bevorzugten Ausführung ist die Dichtlippe in der Außenkontur rechteckig, besonders bevorzugt quadratisch.

Die Dicke der Dichtlippe G2 in Figur 4 liegt im Bereich 0,1 mm bis 4 mm, bevorzugt 0,2 mm bis 3 mm, insbesondere 0,3 mm bis 2 mm. Die Außenmaße des Lochverstärkers sind wie bei der Ausgestaltung gemäß Figur 3 zu wählen, wobei seine Dicke in Figur 4 mit G3 bezeichnet ist.

Mit der Erfindung wird erstmals ein Verfahren und eine Vorrichtung angegeben, mit dem es möglich ist, Materialien, beispielsweise Feststoffe, für analytische Zwecke aus Bulkware zu entnehmen, das Staubexpositionen für die durchführenden Mitarbeiter vermeidet (Arbeitsschutz) und das Produkt sowohl im Abfüllgebinde (Bulkware) als auch Mustergebinde vor externen und/oder partikulären Verunreinigungen schützt (Produktschutz).

## Patentansprüche

1. Verfahren zur geschlossenen Musterentnahme aus Abfüllanlagen, umfassend folgende Schritte:
- Abfüllen einer Mustermenge in ein Behältnis (1) mit einer Wand (3);
- Aufbringen eines Verstärkungselementes (20) auf das Behältnis (1) mit der Wand; wobei
das Verstärkungselement (20) ein Lochverstärker mit einer Dichtlippe (52) ist, die auf das Behältnis aufgebracht wird;
- Einbringen einer Bruchstelle (22) im Bereich des Verstärkungselementes (20) in die Wand des Behältnisses (1);
- Einbringung eines Musterentnahmeaufsatzes (30) mit Hohlrohr (40) und einer umlaufenden Nut (54) im Bereich der Bruchstelle (22) in die Wand des Behältnisses (1); wobei die Dichtlippe (52) in die umlaufende Nut (54) des Hohlrohrs (40) eingreift und eine dichte Verbindung zwischen dem Hohlrohr (40) und der Wand des Behältnisses zur Verfügung stellt;
- einmaliges oder mehrmaliges Befüllen eines mit dem Hohlrohr (40) verbundenen Musterbehälters (50);
- Entfernen des Musterbehälters (50) vom Hohlrohr (40) und Verschließen des Musterbehälters (50);
- Entfernen des Musterentnahmeaufsatzes (30) mit Hohlrohr (40) aus dem Behältnis; und
- Verschließen der Bruchstelle (22) des Behältnisses im Bereich des Verstärkungselementes (20).

2. Verfahren nach Anspruch 1,
**dadurch gekennzeichnet,**
**dass** der Musterbehälter (50) zum geschlossenen Befüllen mit dem Hohlrohr (40) über eine Schraubverbindung verbunden wird.

3. Verfahren nach einem der Ansprüche 1 oder 2,
**dadurch gekennzeichnet,**
**dass** die Bruchstelle durch Ausschneiden, Einschneiden und/oder Anritzen im Bereich des Verstärkungselements in die Wand des Behältnisses eingebracht wird.

4. Musterentnahmevorrichtung, insbesondere zur Durchführung des Verfahrens gemäß Anspruch 1 bis 3, mit
- einem Behältnis mit einer Wand,
- einem Musterentnahmeaufsatz, bevorzugt mit einem Gewinde; wobei
der Musterentnahmeaufsatz ein Hohlrohr (40) umfasst, das in das Behältnis im Bereich eines Verstärkungselementes einbringbar ist,
**dadurch gekennzeichnet, dass**
das Verstärkungselement in Form eines Lochverstärkers mit einer Dichtlippe (52) ausgebildet ist und
das Hohlrohr (40) eine umlaufende Nut (54) aufweist, in die die Dichtlippe (52) des Lochverstärkers eingreift und eine dichte Verbindung zwischen dem Hohlrohr (40) der Wand des Behältnisses zur Verfügung stellt.

5. Musterentnahmevorrichtung nach Anspruch 4,
**dadurch gekennzeichnet,**
**dass** das Behältnis ein Beutel, insbesondere ein Kunststoffbeutel, bevorzugt ein Polyethylenbeutel, besonders bevorzugt ein durchsichtiger Polyethylenbeutel ist.

6. Musterentnahmevorrichtung nach einem der Ansprüche 4 oder 5,
**dadurch gekennzeichnet,**
**dass** die Musterentnahmevorrichtung einen Musterbehälter (50) umfasst, der an den Musterentnahmeaufsatz bevorzugt mit einer Schraubverbindung anschließbar ist.

7. Musterentnahmevorrichtung nach einem der Ansprüche 4 bis 6,
**dadurch gekennzeichnet,**
**dass** die Schraubverbindung ein Aufschraubgewinde angebracht am Hohlrohr (40) umfasst.

8. Musterentnahmevorrichtung nach einem der Ansprüche 4 bis 7,
**dadurch gekennzeichnet,**
**dass** die Schraubverbindung ein Außengewinde am Musterbehälter (50), das mit dem Aufschraubgewinde am Hohlrohr (40) verbindbar ist, umfasst.

9. Musterentnahmevorrichtung nach einem der Ansprüche 4 bis 8,
**dadurch gekennzeichnet,**
**dass** der Musterbehälter (50) ein Volumen umfasst, aufnehmend eine Mustermenge.

10. Musterentnahmevorrichtung nach Anspruch 9,
**dadurch gekennzeichnet,**
**dass** die Mustermenge im Bereich 10 g bis 2000 g, bevorzugt 100 g bis 400 g, besonders bevorzugt 200 g bis 300 g liegt.

## Claims

1. Method for closed sampling from filling plants, comprising the following steps:
- filling a sample quantity into a container (1) with a wall (3);
- applying a reinforcing element (20) to the container (1) with the wall;
wherein the reinforcing element (20) is a hole reinforcer with a sealing lip (52) which is applied to the container;
- introducing a fracture point (22) in the area of the reinforcing element (20) into the wall of the container (1);
- introducing a sampling attachment (30) with a hollow tube (40) and a circumferential groove (54) in the area of the fracture point (22) into the wall of the container (1); wherein the sealing lip (52) engages in the circumferential groove (54) of the hollow tube (40) and provides a sealed connection between the hollow tube (40) and the wall of the container;
- single or multiple filling of a sample container (50) connected to the hollow tube (40);
- removal of the sample container (50) from the hollow tube (40) and sealing of the sample container (50);
- removing the sampling attachment (30) with hollow tube (40) from the container; and
- sealing the fracture point (22) of the container in the area of the reinforcement element (20).

2. Method according to claim 1,
**characterised in that**
the sample container (50) is connected to the hollow tube (40) via a screw connection for closed filling.

3. Method according to any one of claims 1 or 2,
**characterised in that**
the fracture point is introduced into the wall of the container by cutting, incising and/or scoring in the area of the reinforcing element.

4. Sampling device, in particular for carrying out the method according to claims 1 to 3, comprising
- a container with a wall,
- a sampling attachment, preferably with a thread;
wherein
the sampling attachment comprises a hollow tube (40) which can be inserted into the container in the region of a reinforcing element,
**characterised in that**
the reinforcing element is designed in the form of a hole reinforcer with a sealing lip (52) and
the hollow tube (40) has a circumferential groove (54) into which the sealing lip (52) of the hole reinforcement engages and provides a sealed connection between the hollow tube (40) and the wall of the container.

5. Sampling device according to claim 4,
**characterised in that**
the container is a bag, in particular a plastic bag, preferably a polyethylene bag, particularly preferably a transparent polyethylene bag.

6. Sampling device according to any one of claims 4 or 5,
**characterised in that**
the sampling device comprises a sample container (50) which can preferably be connected to the sampling attachment by means of a screw connection.

7. Sampling device according to any one of claims 4 to 6,
**characterised in that**
the screw connection comprises a screw-on thread attached to the hollow tube (40).

8. Sampling device according to any one of claims 4 to 7,
**characterised in that**
the screw connection comprises an external thread on the sample container (50) which can be connected to the screw-on thread on the hollow tube (40).

9. Sampling device according to any one of claims 4 to 8,
**characterised in that**
the sample container (50) comprises a volume accommodating a sample quantity.

10. Sampling device according to claim 9,
**characterised in that**
the sample quantity is in the range of 10 g to 2000 g, preferably 100 g to 400 g, and particularly preferably 200 g to 300 g.

## Revendications

1. Procédé pour prélever des échantillons de manière fermée à partir d'installations de remplissage, comprenant les étapes suivantes :
- remplissage d'une quantité d'échantillon dans un récipient (1) avec une paroi (3);
- application d'un élément de renfort (20) sur le récipient (1) avec la paroi;
l'élément de renfort (20) étant un renfort de trou avec une lèvre d'étanchéité (52) qui est appliqué sur le récipient;
- introduction d'un point de rupture (22) dans la paroi du récipient (1) au niveau de l'élément de renfort (20);
- introduction d'un embout de prélèvement d'échantillon (30) avec un tube creux (40) et une rainure périphérique (54) dans la paroi du récipient (1) au niveau du point de rupture (22); la lèvre d'étanchéité (52) s'engageant dans la rainure périphérique (54) du tube creux (40) et assurant une liaison étanche entre le tube creux (40) et la paroi du récipient;
- remplissage unique ou multiple d'un récipient d'échantillonnage (50) relié au tube creux (40);
- retrait du récipient d'échantillonnage (50) du tube creux (40) et fermeture du récipient d'échantillonnage (50);
- retrait de l'embout de prélèvement d'échantillons (30) avec le tube creux (40) du récipient; et
- fermeture du point de rupture (22) du récipient dans la zone de l'élément de renfort (20).

2. Procédé selon la revendication 1,
**caractérisé en ce**
**que** le récipient d'échantillonnage (50) est relié au tube creux (40) par un raccord vissé pour permettre un remplissage à l'abri de l'air.

3. Procédé selon l'une des revendications 1 ou 2,
**caractérisé en ce**
**que** le point de rupture est réalisé dans la paroi du récipient par découpe, incision et/ou rayure dans la zone de l'élément de renfort.

4. Dispositif de prélèvement d'échantillons, en particulier pour la mise en œuvre du procédé selon les revendications 1 à 3, comprenant
- un récipient avec une paroi,
- un embout de prélèvement d'échantillons, de préférence fileté;
dans lequel
l'embout de prélèvement d'échantillons comprend un tube creux (40) qui peut être inséré dans le récipient dans la zone d'un élément de renfort,
**caractérisé en ce**
**que** l'élément de renfort est réalisé sous la forme d'un renfort de trou avec une lèvre d'étanchéité (52) et
le tube creux (40) présente une rainure périphérique (54) dans laquelle s'engage la lèvre d'étanchéité (52) du renfort de trou et qui assure une liaison étanche entre le tube creux (40) et la paroi du récipient.

5. Dispositif de prélèvement d'échantillons selon la revendication 4,
**caractérisé en ce**
**que** le récipient est un sac, en particulier un sac en plastique, de préférence un sac en polyéthylène, et plus particulièrement un sac en polyéthylène transparent.

6. Dispositif de prélèvement d'échantillons selon l'une des revendications 4 ou 5, **caractérisé en ce**
**que** le dispositif de prélèvement d'échantillons comprend un récipient à échantillons (50) qui peut être raccordé de préférence à l'embout de prélèvement d'échantillons à l'aide d'un raccord à vis.

7. Dispositif de prélèvement d'échantillons selon l'une des revendications 4 à 6, **caractérisé en ce**
**que** le raccord vissé comprend un filetage vissé fixé au tube creux (40).

8. Dispositif de prélèvement d'échantillons selon l'une des revendications 4 à 7, **caractérisé en ce**
**que** le raccord vissé comprend un filetage extérieur sur le récipient d'échantillons (50), qui peut être raccordé au filetage vissé sur le tube creux (40).

9. Dispositif de prélèvement d'échantillons selon l'une des revendications 4 à 8, **caractérisé en ce**
**que** le récipient d'échantillons (50) comprend un volume pouvant contenir une quantité d'échantillons.

10. Dispositif de prélèvement d'échantillons selon la revendication 9, **caractérisé en ce**
**que** la quantité d'échantillon comprise 10 g à 2000 g, de préférence 100 g à 400 g, et de manière particulièrement préférée 200 g à 300 g.
